(19) Europäisches Patentamt / European Patent Office / Office européen des brevets

(11) **EP 1 368 960 B1**

(12) **EUROPEAN PATENT SPECIFICATION**

(45) Date of publication and mention
of the grant of the patent:
**22.06.2011   Bulletin 2011/25**

(21) Application number: **02753763.8**

(22) Date of filing: **06.03.2002**

(51) Int Cl.:
*G06T 5/00* (2006.01)      *G06T 5/20* (2006.01)

(86) International application number:
**PCT/US2002/006870**

(87) International publication number:
**WO 2002/078319 (03.10.2002 Gazette 2002/40)**

(54) **DIGITAL IMAGE APPEARANCE ENHANCEMENT AND COMPRESSIBILITY IMPROVEMENT METHOD AND SYSTEM**

VERFAHREN UND VORRICHTUNG ZUR VERBESSERUNG DES AUSSEHENS UND DER KOMPRIMIERBARKEIT DIGITALER BILDER

PROCEDE ET SYSTEME D'AMELIORATION D'ASPECT ET D'AMELIORATION DE COMPRESSIBILITE D'IMAGES NUMERIQUES

(84) Designated Contracting States:
**DE FR GB**

(30) Priority:  **07.03.2001  US 800638**

(43) Date of publication of application:
**10.12.2003   Bulletin 2003/50**

(73) Proprietor: **Hewlett-Packard Company
Palo Alto, CA 94304-1112 (US)**

(72) Inventors:
• **ATKINS, C, Brian
  Mountain View, CA 94043 (US)**
• **GONDEK, Jay S,
  Camas, WA 98607 (US)**

(74) Representative: **Powell, Stephen David et al
Williams Powell
Staple Court
11 Staple Inn Buildings
London, WC1V 7QH (GB)**

(56) References cited:
**EP-A- 0 531 904      EP-A- 0 686 941
US-A- 5 050 227      US-A- 5 920 356
US-B1- 6 192 161**

**Description**

FIELD OF THE INVENTION

The present invention relates generally to image processing, and more particularly, to a digital image appearance enhancement and compressibility improvement method and system.

BACKGROUND OF THE INVENTION

Printers are well known peripherals that render text and images. With the advent and growth of the digital camera market, there is increased consumer demand for low-cost printers that render digital images well. Consequently, one design consideration for printer manufacturers is how to improve the perceived quality of the rendered images. Typically, printer manufacturers utilize software image processing programs to improve picture quality.

For example, image-sharpening algorithms are often used to improve the appearance of images. The intended effect of these image-sharpening algorithms is to increase pixel contrast on and around edges, which theoretically should lead to greater perception of details. Unfortunately, however, such image sharpening algorithms also enhance noise and compression artifacts, which can actually exacerbate image appearance. Furthermore, these image-sharpening algorithms reduce compressibility of the image, which is undesirable as described more fully hereinafter.

Other algorithms have been developed for improving the appearance of images by actively suppressing noise and artifacts. However, such algorithms have a smoothing effect on and around sharp edges, which leads to a softer appearance (i.e., a fuzzy image with less perception of details). Moreover, such algorithms can also be very computationally expensive, thereby requiring higher implementation costs and complexity, making these algorithms less attractive.

A second design consideration is how to decrease the time that a user has to wait from the time a print command is issued to the time the printing is completed. The latency (i.e., time that elapses between the time the print command is issued and the completed print job) is a function of the time that is needed to transfer the digital image from the PC to the printer and the time that is needed by the printer to actually render the image. The limiting factor is often the speed at which the image to be printed can be communicated from the computing appliance (e.g., personal computer (PC)) to the printer. For example, the speed of this communication is often limited by the bandwidth of the cable connecting the PC to the printer. In order to improve the speed of communication, one of many well-known compression algorithms are applied to the image so that the number of bits or data symbols that needs to be transferred between the PC and printer is decreased, thereby reducing the time needed to communicate information between the PC and the printer.

For example, one approach to improve compressibility is to apply a smoothing filter. The smoothing makes neighboring pixels more consistent with each other, which allows the image to be represented using fewer bytes in computer memory. Unfortunately, smoothing can degrade image appearance by reducing edge contrast. In other words, smoothing militates against the first design consideration of improving the image appearance.

Based on the foregoing, there remains a need for a method and system for improving the appearance of digital images while improving the compressibility of the image and that overcomes the disadvantages set forth previously.

US-A-6,192,161 and EP-A-0531904 relate to image-enhancement arrangements based on activity metrics. The disclosure of these documents corresponds generally to the preamble of claim 1.

US-A-5,050,227, US-A-5,920,356 and EP 0686941 relate to edge-dependent image enhancement arrangements.

The article "XP010091465, RAJESH JHA; JERNIGAN M E: "EDGE ADAPTIVE FILTERING: HOW MUCH AND WHICH DIRECTION?", PROCEEDINGS OF THE INTERNATIONAL CONFERENCE ON SYSTEMS, MAN AND CYBERNETICS. CAMBRIDGE, MA., NOV. 14 - 17, 1989, NEW YORK, IEEE, US, 364-366, VOL.1" discloses an adaptive filter in which an edge strength measure is extracted from the local variance.

SUMMARY OF THE INVENTION

The present invention is defined by the appended claims and relates to a method and system for processing a digital image and improving the appearance of the image while enhancing the compressibility of the image are provided. The digital image has a plurality of input pixels.

According to a first aspect of the present invention there is provided an image processing system comprising: a filter selection mechanism for receiving an input pixel window, which is a smaller portion of an image to be printed, the filter selection mechanism determining whether the input pixel window has a predetermined level of variation indicating a threshold level of image detail, and responsive to the predetermined level of variation indicating the threshold level of image detail has not been met, generating a filter identifier for the input pixel window, the filter identifier identifying a blurring filter to be applied to the input pixel window portion of the image, and responsive to the predetermined level of variation indicating the threshold level of image detail has been met, generating a filter identifier for the input pixel window, the filter identifier identifying an appearance enhancement filter to be applied to the input pixel window portion of the image resulting in a corresponding image enhanced output pixel portion of the image, the appearance enhancement filter being a sharpening filter based on edge information of a neighbourhood of the input pixels; and a filter application unit coupled to the filter selection mechanism for receiving the filter identifier and applying a filter identified by the filter identifier to the input pixel window to generate the corresponding output pixel.

According to a second aspect of the present invention there is provided a method for processing a digital image having a plurality of input pixels comprising: (a) receiving an input pixel window which is a smaller portion of an image to be printed;

(b) determining whether the input pixel window has a predetermined level of variation indicating a threshold level of image detail; (c) responsive to the predetermined level of variation indicating the threshold level of image detail has not been met, generating a filter identifier for the input pixel window, the filter identifier identifying a blurring filter to be applied to the input pixel window portion of the image; (d) responsive to the predetermined level of variation indicating the threshold level of image detail has been met, generating a filter identifier for the input pixel window, the filter identifier identifying an appearance enhancement filter to be applied to the input pixel window portion of the image resulting in a corresponding image enhanced output pixel portion of the image, the appearance enhancement filter being a sharpening filter based on edge information of a neighbourhood of the input pixels; and (e) applying a filter identified by the filter identifier to the input pixel window to generate the corresponding output pixel.

## BRIEF DESCRIPTION OF THE DRAWINGS

The present invention is illustrated by way of example, and not by way of limitation, in the figures of the accompanying drawings and in which like reference numerals refer to similar elements.

FIG. 1 is a block diagram illustrating an exemplary computer system in which the appearance enhancement and compressibility improvement mechanism of the present invention can be implemented.
FIG. 2 is a block diagram that illustrates in greater detail the appearance enhancement and compressibility improvement mechanism of FIG. 1 in accordance with one embodiment of the present invention.
FIG. 3 is a block diagram that illustrates an exemplary implementation of the appearance enhancement and compressibility improvement mechanism of FIG. 2.
FIG. 4 is a block diagram that illustrates in greater detail the edge dependent filter selection module of FIG. 3.
FIG. 5 is a flowchart illustrating the steps performed by the appearance enhancement and compressibility improvement mechanism in accordance with one embodiment of the present invention.
FIG. 6 is a flowchart illustrating the steps performed by the appearance enhancement and compressibility improvement mechanism in accordance with a preferred embodiment of the present invention.
FIG. 7 is a flowchart illustrating in greater detail the step of computing pixel components by utilizing a nonlinear filter of FIG. 6 in accordance with one embodiment of the present invention.
FIG. 8 is a flowchart illustrating the process by which a particular filter is selected in accordance with one embodiment of the present invention.
FIG. 9 illustrates a process by which edge angle coefficients are determined in accordance with one embodiment of the present invention.
FIG. 10 is a flowchart illustrating the process by which a class index is determined based on the edge angle coefficients in accordance with one embodiment of the present invention.
FIG. 11 illustrates a process by which curvature coefficients are determined in accordance with one embodiment of the present invention.

## DETAILED DESCRIPTION OF THE PREFERRED EMBODIMENT

A method and system for processing digital images and improving the appearance of the images while enhancing the compressibility of the images are described. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

## Computer System 100

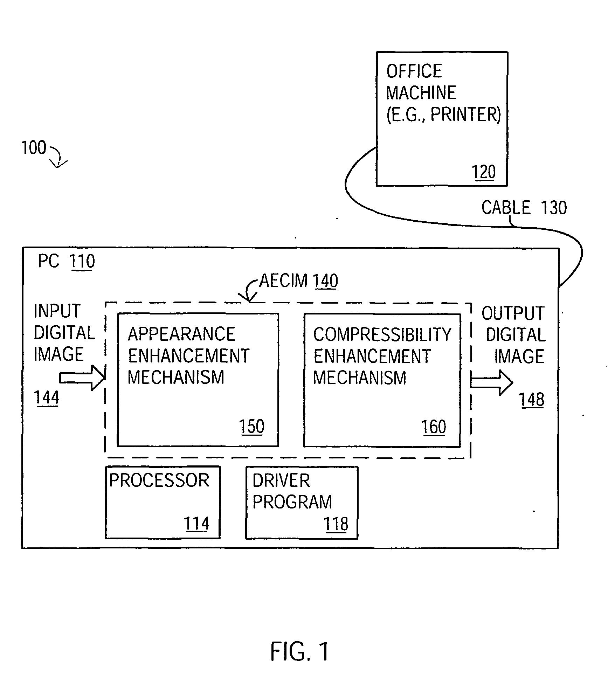

FIG. 1 is a block diagram illustrating an exemplary computer system 100 in which the appearance enhancement and compressibility improvement mechanism 140 of the present invention can be implemented. The computer system 100 includes a personal computer (PC) 110 coupled to an office machine 120 via a cable 130. The PC 110 includes a processor 114 for executing software instructions and a driver program 118, which when executed by the processor 114, communicates and controls the office machine 120. For example, the driver program 118 can include software instructions for performing signal processing that is well known by those of ordinary skill in the art on digital information to be generated by the office machine 120.

The office machine 120 can be, but is not limited to, a printer, a copier, a scanner, an all-in-one office machine, and any device that renders images and/or text. For example, when the office machine 120 is a printer, the driver program 118 is a printer driver that has software instructions, which when executed by the processor 114, controls and manages the printing or rendering process for the printer.

The PC 110 can include the appearance enhancement and compressibility improvement mechanism (AECIM) 140 of the present invention. The AECIM 140 includes an appearance enhancement mechanism 150 for improving the appearance of the digital image and a compressibility enhancement mechanism 160 for improving the compressibility of the digital image. As noted previously, it is desirable to improve the compressibility of an image in order to increase the speed at which a digital image can be communicated to the office machine 120.

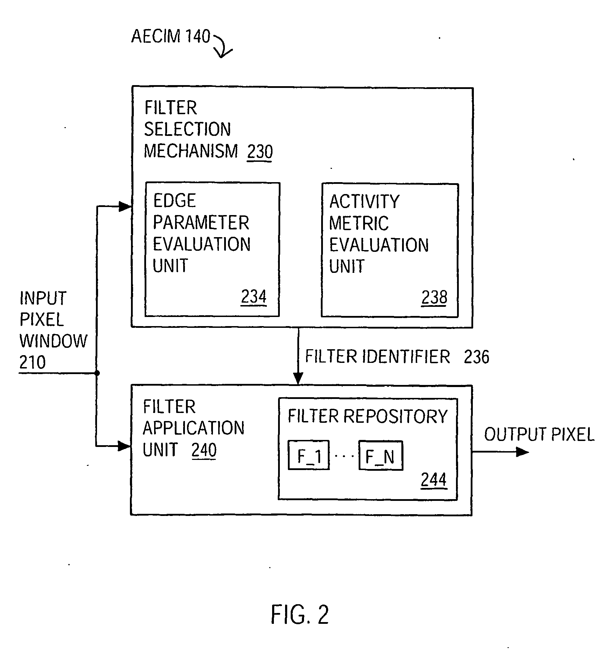

The AECIM 140 includes an input for receiving an input digital image 144 and an output for generating a corresponding output digital image 148. As described in greater detail hereinafter with reference to FIG. 2, the AECIM 140 can receive an input pixel window, select a filter appropriate for a current pixel, and apply the selected filter to the input pixel window to generate an output pixel that replaces the current input pixel.

It is noted that the appearance enhancement and compressibility improvement mechanism 140 of the present invention can be implemented in software (e.g., in a driver), in firmware, in hardware, or in a combination thereof. For example, in one embodiment, the AECIM 140 can be implemented as software instructions as part of the driver program 118.

Moreover, the AECIM 140 of the present invention can reside in PC 110, office machine 120, or in a device that is disposed remote from the PC 100 and the office machine 120. For example, the AECIM 140 can be implemented as hardware circuitry that is disposed entirely in the PC 110 or entirely in the office machine 120. Alternatively, the AECIM 140 can be implemented as software that reside on a computer readable medium (e.g., a memory element, such as RAM or ROM, a computer disk, or compact disc) accessible by the PC 110 or the office machine 120. In another embodiment, the AECIM 140 can be in the form of software code that resides on a server that is part of a network (e.g., the Internet) to which PC 110 or office machine 120 is connected.

Alternatively in a distributed implementation, a first portion of the AECIM 140 of the present invention can reside in PC 110, a second portion of the AECIM 140 can reside in the office machine 120 and other portions of the AECIM 140 can be distributed in other devices, where the portions can be software, hardware, firmware or a combination thereof.

AECIM 140

FIG. 2 is a block diagram that illustrates in greater detail the appearance enhancement and compressibility improvement mechanism of FIG. 1 in accordance with one embodiment of the present invention. The AECIM 140 includes a filter selection mechanism 230 for selecting an appropriate filter for use and a filter application mechanism 240 for applying the selected filter to the input pixel window 210 to generate an output pixel. The input pixel window is a plurality of pixels to which a filter is applied to generate a corresponding output pixel. It is noted that the input pixel window 210 typically includes the current input pixel. However, the input pixel window 210 can include pixels about the current input pixel (e. g., a neighborhood of pixels adjacent to the current pixel) without including the current pixel.

The filter selection mechanism 230 selects a filter (e. g., a set of filter coefficients) from among a plurality of filters based on a filter selection window, which in this embodiment is the input pixel window 210. The filter selection window is a plurality of pixels that are used to select an appropriate filter. The filter selection mechanism 230 can select a filter appropriate for the current input pixel by using more than one factor.

For example, in operation, the filter selection mechanism 230 employs an edge parameter evaluation unit 234 for computing an edge parameter corresponding to the input pixel window and utilizing the edge parameter to select an appropriate filter (e. g., a suitable set of filter coefficients for the input pixel window). Based on the input pixel window 210, the filter selection mechanism 230, for example, can select a blurring filter, a smoothing filter, a sharpening filter, or an enhancement filter based on one or more parameters computed from the input pixel window. As described in greater detail hereinafter, edge parameter can include any measurable unit that describes one or more traits or characteristics of an edge. The edge parameter can be, for example, an edge angle, edge sharpness, edge curvature, etc.

An edge is simply a contour to divide two regions. Edge angle is a characteristic of an edge that conveys the orientation of a contour between two regions. Edge sharpness is the width of a transition region between the two regions. For example, the edge sharpness can be the width of a transition region between two regions having different colors or intensity values. Edge sharpness can also be expressed as the rate change of the transition moving in a direction perpendicular to the edge angle. A sharper edge means that the transition region is narrow or less wide. A smooth edge means that the transition is wide or less narrow. Edge curvature is a characteristic of an edge that conveys the rate change of sharpness as one moves toward the edge. For example, the edge curvature can convey whether the current side of the edge is light or dark.

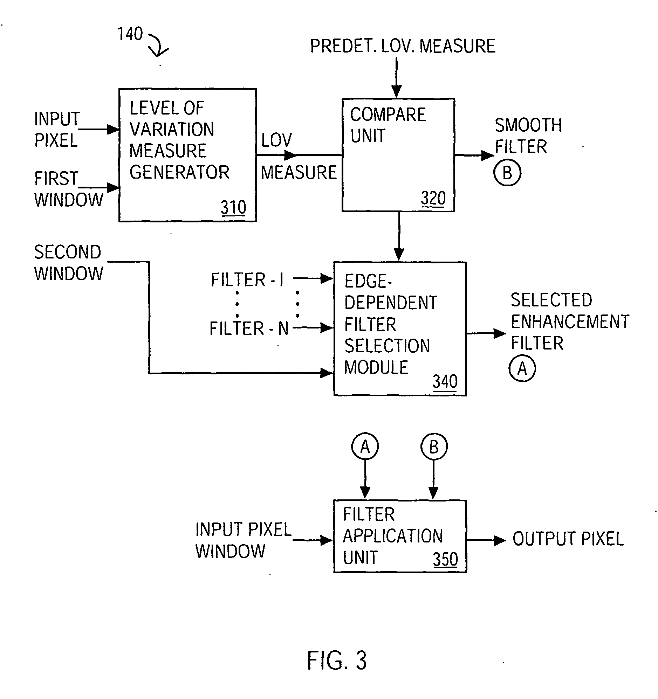

The filter selection mechanism 230 also employs an activity metric evaluation unit 238 for computing a metric of activity in the input pixel window (e. g., the pixels in a neighborhood of the current pixel) and utilizing the activity metric to select an appropriate set of filter coefficients for the input pixel window. An example of an activity metric that can be utilized is a level of variation that is described in greater detail hereinafter with reference to FIG. 3.

It is noted that the filter selection mechanism 230 can select a filter (e. g., a set of filter coefficients) that are appropriate for the current input pixel by using a combination of an edge parameter, an activity metric and , another measurable parameter.

It is further noted that the filter selection window employed to determine an activity metric can be different from or the same as the input pixel window 210. Similarly, the filter selection window employed to determine an edge parameter can be different from or the same as the input pixel window 210. Also, the filter selection window employed to determine an edge parameter can be different from or the same as the filter selection window employed to determine an activity metric.

It is to be understood that although a 5 x 5 square window of pixels is used in the example described herein, the input pixel window, the filter selection window for use in determining an edge parameter, and the filter selection window for use in determining an activity metric can be of any shape and have any number of pixels to suit a particular application. Furthermore, although in this example the input pixel window and the filter selection windows are the same window of pixels, it is to be understood that the shape and number of pixels of the input pixel window and the filter selection windows can be different from each other.

One manner in which the filter selection mechanism 230 can indicate an appropriate filter that has been selected is to provide a filter identifier 236 that identifies a particular set of filter coefficients to apply to the input pixel window 210.

The filter application mechanism 240 can include a filter repository 244 for storing a plurality of filters, F_1 to F_N, (e.g., a plurality of sets of filter coefficients). The filter identifier 236 that is provided by the filter selection mechanism 230 can be employed to specify an appropriate filter in the filter repository 244 to apply to the input pixel window 210 to generate an output pixel.

Appearance Enhancement and Compressibility Improvement Mechanism 140

FIG. 3 is a block diagram that illustrates an exemplary implementation of the appearance enhancement and compressibility improvement mechanism 140 of FIG. 2. In this embodiment, a combination of an activity metric and edge parameters is utilized to select an appropriate filter for the input pixel window 210.

In this embodiment, the appearance enhancement and compressibility improvement mechanism 140 includes a level of variation measure generator 310 for receiving an input pixel, a first window of pixels (e.g., a filter selection window for use in determining an activity metric) related to the current input pixel, and based thereon for generating a level of variation (LOV) measure. The appearance enhancement and compressibility improvement mechanism 140 also includes a compare unit 320 that is coupled to the LOV measure generator 310. The compare unit 320 receives the LOV measure and a predetermined LOV measure, and based thereon determines whether the LOV measure is in predetermined relationship with the predetermined LOV measure. When the LOV measure is in predetermined relationship with the predetermined LOV measure, a blur filter or smoothing filter is provided. When applied to the input pixel window, a blur filter or smoothing filter generates a smooth value or blurred value of the current input pixel. For example, the smooth value can be an average of the pixels adjacent to the current input pixel.

When the LOV measure is not in a predetermined relationship with the predetermined LOV measure, the input pixel is processed by an edge dependent filtering and a sharpening filter is applied to improve the appearance of the image in the region that has the current input pixel. The edge dependent filter selection module 340 receives a second window of pixels (e.g., a filter selection window for use in determining an edge parameter) related to the current input pixel and based thereon selects one set of filter coefficients from the plurality of sets of filter coefficients available (e.g., FILTER 1 . FILTER_N). It is noted that one of the filters (e.g., FILTER_1 .. FILTER_N) can be a smoothing or blurring filter or an enhancement filter.

An enhancement filter can be a smoothing filter, a sharpening filter, a filter that increases contrast across an edge and smoothes along an edge, a specially designed filter, or a combination thereof. The specially designed filter, for example, can be designed to increase the contrast across an edge of a particular angle. An example of a filter that smoothes along an edge is an anisotropic diffusion filter that smoothes along an edge (i.e., blurs in an interior region). The filters can be selected from those that are well known by those of ordinary skill in the art. The filter application unit 350 applies the selected set of filter coefficients to the input pixel window to generate an output pixel.

Edge Dependent Filter Selection Module 340

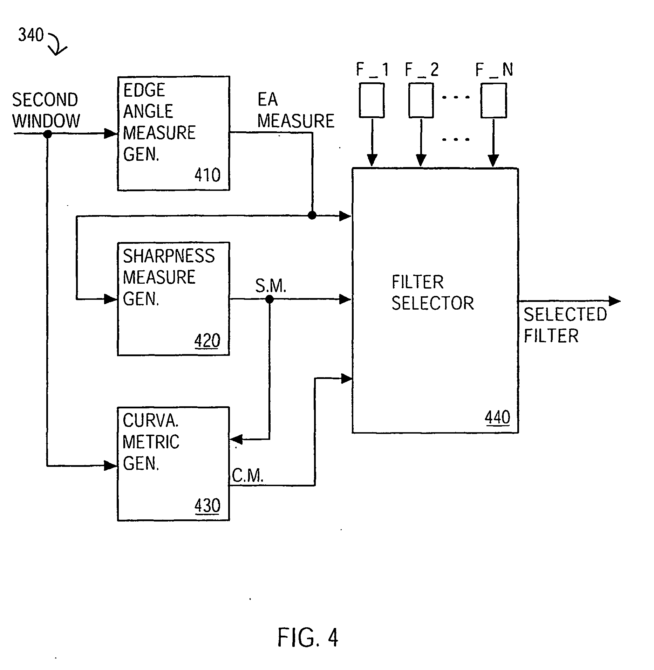

FIG. 4 is a block diagram that illustrates in greater detail the edge dependent filter selection module 340 of FIG. 3. The edge dependent filter selection module 340 includes an edge angle measure generator 410, a sharpness measure generator 420, a curvature metric generator 430, and a filter selector 440. The edge angle measure generator 410 receives the second window of pixels related to the current pixel and generates an edge angle measure that is provided to the filter selector 440 and the sharpness measure generator 420. The sharpness measure generator 420 is coupled to the edge angle measure generator 410 for receiving the edge angle measure, and based thereon, generates a sharpness measure (SM) that is provided to the filter selector 440 and the curvature metric generator 420. The curvature metric generator 430 includes a first input that is coupled to the sharpness measure generator 420 to receive the sharpness measure, and a second input for receiving the second window. Based on these inputs, the curvature metric generator 430 generates a curvature metric, which is provided to the filter selector 440.

The filter selector 440 is coupled to the edge angle measure generator 410, the sharpness measure generator 420, and the curvature metric generator 430 to receive the edge angle measure, sharpness measure, and the curvature metric, respectively, and based on these inputs selects one set of filter coefficients to apply to the current input pixel.

A color image typically includes a plurality of pixels that are each represented by red, green, blue (RGB) values. For example, a pixel can be represented by a total of twenty-four bits where eight bits represent the red component of the pixel, eight bits represent the green component of the pixel, and eight bits represent the blue component of the pixel. The color image is also said to include a plurality of color planes (e.g., a red color plane, a green color plane, and a blue color plane) where each color plane has the respective color components for the pixels of the image.


Processing Steps

According to another embodiment, the image processing method performs the following steps for each input pixel. First, an input pixel window that typically includes the current input pixel and pixels adjacent to the current input pixel is received. Second, a filter identifier is generated based on either an edge parameter computed based on the input pixel window or an activity metric computed based on the input pixel window. Third, a filter specified by the filter identifier is applied to the input pixel window to generate an output pixel corresponding to the current input pixel.

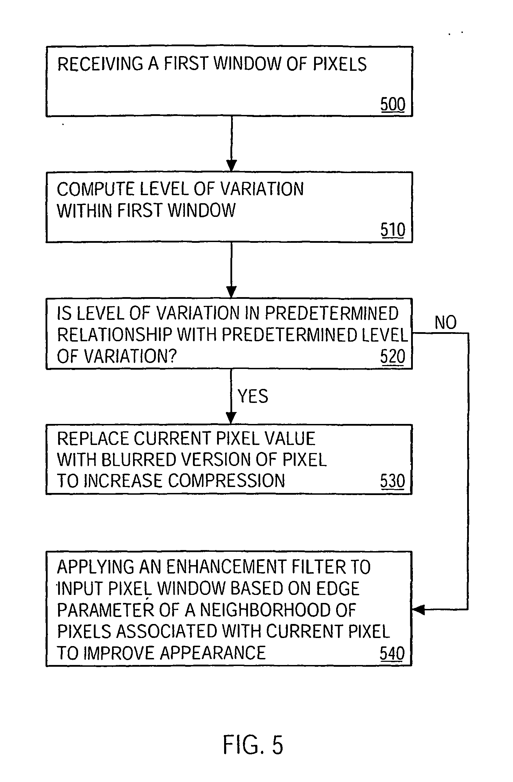

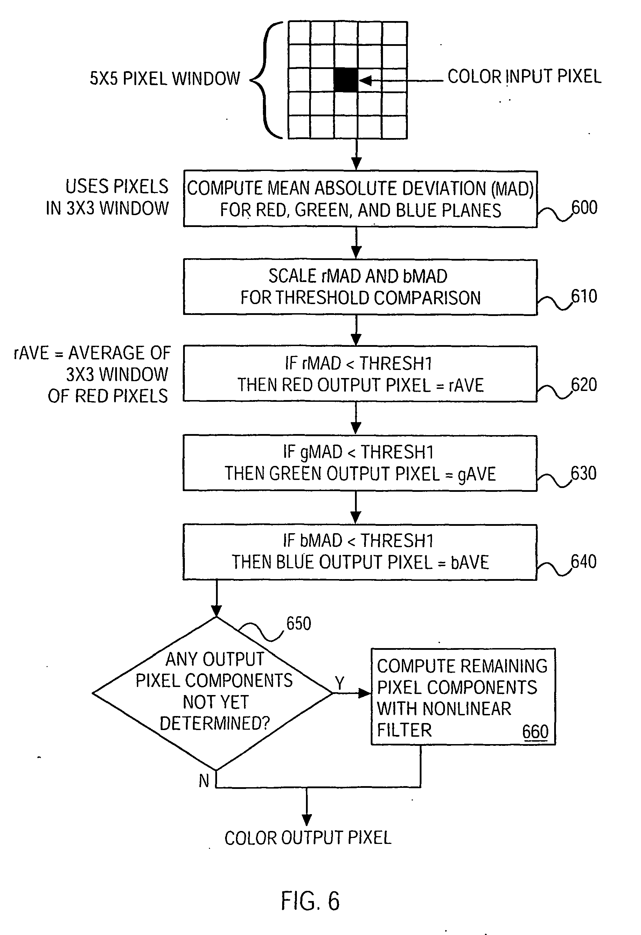

FIG. 5 is a flowchart illustrating the steps performed by the appearance enhancement and compressibility improvement mechanism in accordance with one embodiment of the present invention. In step 500, a first window of pixels (e.g., a filter selection window) is received. In step 510, the level of variation, which is an example of an activity metric, within the first window is computed. For example, the level of variation may be determined by computing the mean average deviation (MAD) of the green color plane, the red color plane, the blue color plane, or of a plane extracted from all three color planes (e.g., a luminance plane) as described in greater detail hereinafter with reference to FIG. 6.

In step 520, a determination is made whether the level of variation computed in step 510 is in a predetermined relationship with a predetermined level of variation. For example, when the level of variation is less than a predetermined level of variation, the determination can indicate that the pixel is in a smooth uniform region that conveys little or nothing in terms of edges, texture or image detail.

In step 530, the current pixel is replaced by a blurred version of the pixel, thereby increasing the compressibility of the current region of the image. It is noted that this step may also improve image appearance.

In step 540, when the level of variation is not in a predetermined relationship with a predetermined level of variation (e.g., equal to or greater than the predetermined level of variation), this determination can indicate that the current region conveys information regarding edges, texture or image detail. In this case, an enhancement filter is selected based on edge information and applied to the input pixel window (e.g., a neighborhood of pixels that includes the current input pixel), thereby improving the appearance of the current region of the image.


Processing Steps for Preferred Embodiment

FIG. 6 is a flowchart illustrating the steps performed by the appearance enhancement and compressibility improvement mechanism in accordance with one embodiment of the present invention.

The input to this invention is a first input image 144, and the output is a second image 148 having the same size as the first image. When the input 144 and output 148 images are color, each pixel is defined by red (R), green (G), and blue (B) coordinate values in the range from 0 to 255, inclusive. Although an exemplary embodiment of the present invention is described hereinafter with reference to images represented in the (R,G,B) color space, it is noted that the appearance enhancement and compressibility improvement mechanism of the present invention can be applied to enhance images that are represented in other color spaces (e.g., CIELab, CIELuv, Yuv). Furthermore, it is noted that the present invention can also be applied to improve monochrome images (e.g., grayscale images).

One output pixel is generated for every pixel in the input image. In order to determine any output pixel, it is only necessary to know a first window of pixels (eg., a window of 5x5 pixels) centered at the corresponding input pixel. It is noted that one of ordinary skill in the art would readily appreciate that this algorithm can be modified so that it is only necessary to know a neighborhood of pixels, where the neighborhood of pixels can have any size or shape with reference to the corresponding input pixel. Output pixels may be generated in any order or even in parallel if resources allow. In this embodiment, output pixels are generated in raster order.

Referring to FIG. 6, the step 600, a mean absolute deviation is computed for each of the R, G, and B planes. The mean absolute deviations for the R, G, and B planes are denoted as rMAD, gMAD, and bMAD, respectively.

Writing the red coordinate values in the input pixel window as follows,

$$
\begin{array}{ccccc}
RI(-2,-2) & RI(-2,-1) & RI(-2,0) & RI(-2,1) & RI(-2,2) \\
RI(-1,-2) & RI(-1,-1) & RI(-1,0) & RI(-1,1) & RI(-1,2) \\
RI(0,-2) & RI(0,-1) & RI(0,0) & RI(0,1) & RI(0,2) \\
RI(1,-2) & RI(1,-1) & RI(1,0) & RI(1,1) & RI(1,2) \\
RI(2,-2) & RI(2,-1) & RI(2,0) & RI(2,1) & RI(2,2)
\end{array}
\quad,
$$

where R(0,0) is the red coordinate value of the input pixel, and the red mean absolute deviation is computed as

$$
\mathrm{rMAD} = \sum_{m=-1}^{1} \sum_{n=-1}^{1} \left| RI(m,n) - \mathrm{rAVE} \right| ,
$$

where rAVE is a 3x3 pixel average computed as

$$
\mathrm{rAVE} = \left\lfloor \frac{1}{9} \left( 4 + \sum_{m=-1}^{1} \sum_{n=-1}^{1} RI(m,n) \right) \right\rfloor ,
$$

and $\lfloor \cdot \rfloor$ denotes truncation to integer. It is noted that rMAD is actually nine times greater than a true "mean absolute deviation." The quantities gMAD and bMAD are computed in a similar manner by using the green and blue color components, respectively.

In step 610, the AECIM 140 scales rMAD by ½, and bMAD by ¼. This scaling step prepares rMAD, gMAD, and bMAD for comparison with each other in order to determine which color component has the greatest impact on perceived variation in the vicinity of the input pixel. Since luminance variation is a reasonable predictor of perceived color variation, the magnitudes of rMAD, gMAD, and bMAD are adjusted according to their approximate relative contributions to the luminance component.

To see that scaling rMAD by ½ and bMAD by ¼ achieves the desired objective, consider that the luminance Y for an (R, G, B) pixel is often computed as

$$
Y = 0.299 * R + 0.587 * G + 0.114 * B ,
$$

and observe that 0.299 is approximately half of 0.587, and that 0.114 is approximately one quarter of 0.587. One desirable consequence of this scaling step is that it renders rMAD, gMAD, and bMAD all comparable to the same threshold value (e.g., THRESH1).

Next, in step 620 rMAD is compared with THRESH1. Preferably, the predetermined threshold (THRESH1) is determined empirically and remains fixed for all input images. Alternatively, the value of THRESH1 may change from

7

image to image, or even from pixel to pixel.

If rMAD is less than THRESH1, then the red component of the output pixd (RO) is assigned to the value of the average (rAVE) of the red component (i.e., RO = rAVE). rAVE is computed by using a predetermined neighborhood of pixels (e.g., a second window of 3 x 3 pixels within the first window) with reference to the input pixel. In the case where rMAD is less than THRESH1, there is little or no pixel activity in the red component, thereby implying that the red component may be blurred or smoothed so as to improve compressibility without adversely affecting image appearance.

Processing steps 630 and 640 involve the same operations as described previously with reference to step 620, except that the processing is for the green plane and the blue plane.

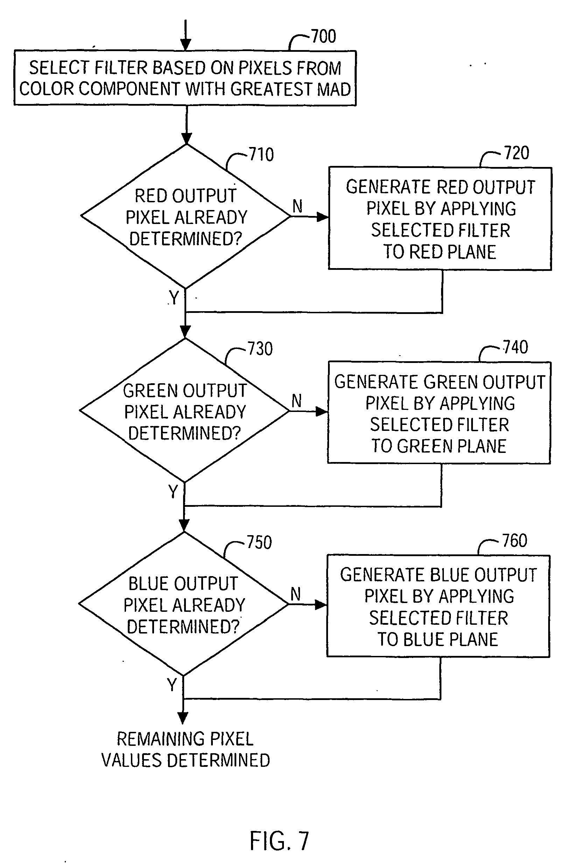

In decision block 650, a determination is made whether any color components of the output pixel have not yet been determined. When there are color components of the output pixel that have not yet been determined, these color components are computed by using a nonlinear filter (step 660). Step 660 is described in greater detail hereinafter with reference to FIG. 7. Otherwise, the color output pixel is completely determined at this point.

Computing Pixel Components Using a Non-linear Filter

FIG. 7 is a flowchart illustrating in greater detail the step of computing color components by using a nonlinear filter of FIG. 6 in accordance with one embodiment of the present invention. In step 700, a filter is selected from a group of different filters based on pixels from the color component with the greatest MAD. In decision block 710, a determination is made whether a red output pixel is already determined. When the red output pixel has not yet been determined, in step 720, a red output pixel is generated by applying the filter selected in step 700 to the red plane. Otherwise, processing proceeds to decision block 730.

In decision block 730, a determination is made whether a green output pixel is already determined. When the green output pixel has not yet been determined, in step 740, a green output pixel is generated by applying the filter selected in step 700 to the green plane. Otherwise, processing proceeds to decision block 750.

In decision block 750, a determination is made whether a blue output pixel is already determined. When the blue output pixel has not yet been determined, in step 760, a blue output pixel is generated by applying the filter selected in step 700 to the blue plane.

In the nonlinear filtering process, first identify the largest among rMAD, gMAD, and bMAD (after scaling rMAD by ½ and bMAD by ¼ as described above with reference to step 610). Based on the pixels in the corresponding color component, a set of filter coefficients, denoted as

$$
\begin{array}{ccccc}
FC(-2,-2) & FC(-2,-1) & FC(-2,0) & FC(-2,1) & FC(-2,2) \\
FC(-1,-2) & FC(-1,-1) & FC(-1,0) & FC(-1,1) & FC(-1,2) \\
FC(0,-2) & FC(0,-1) & FC(0,0) & FC(0,1) & FC(0,2) \\
FC(1,-2) & FC(1,-1) & FC(1,0) & FC(1,1) & FC(1,2) \\
FC(2,-2) & FC(2,-1) & FC(2,0) & FC(2,1) & FC(2,2)
\end{array}.
$$

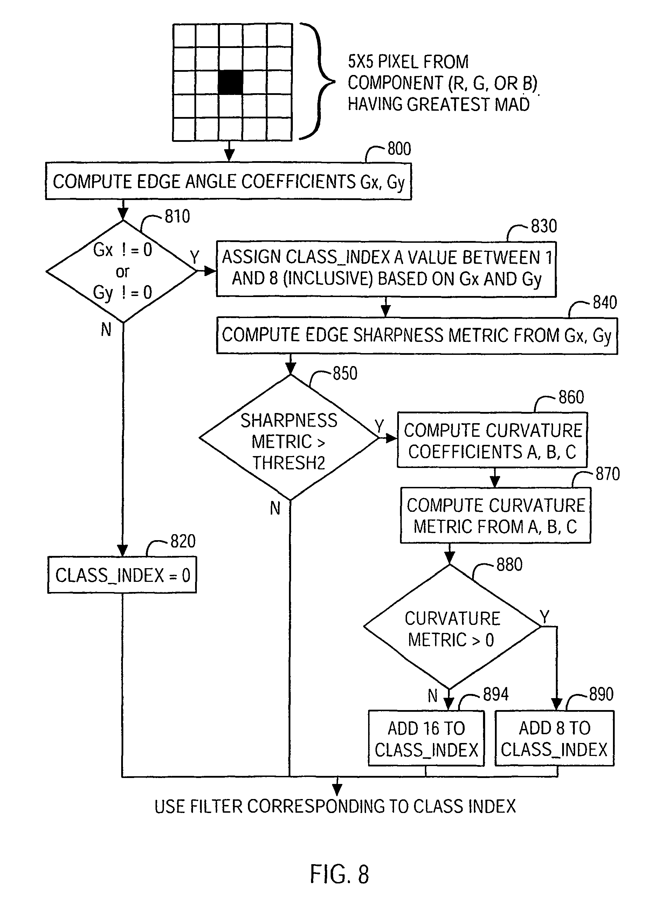

are selected. The filter selection process is described in greater detail hereinafter with reference to FIG. 8.

Next if the red component of the output pixel has not yet been determined, it is computed by applying the selected filter coefficients to the red component of the input pixel window. That is, the red output pixel is computed as follows:

$$
RO = \sum_{m=-2}^{2} \sum_{n=-2}^{2} RI(m,n) \cdot FC(m,n).
$$

Similarly, if necessary the green component of the output pixel is computed as follows:

$$GO = \sum_{m=-2}^{2} \sum_{n=-2}^{2} GI(m,n) \cdot FC(m,n) \quad ,$$

where $GI(\cdot,\cdot)$ denotes the green input pixel values. In the same manner, if is necessary, the blue component of the output pixel is computed as follows:

$$BO = \sum_{m=-2}^{2} \sum_{n=-2}^{2} BI(m,n) \cdot FC(m,n) \quad ,$$

where $BI(\cdot,\cdot)$ denotes the blue input pixel values.

FIG. 8 is a flowchart illustrating in greater detail the step of selecting a nonlinear filter (step 700 of FIG. 7) in accordance with one embodiment of the present invention. This portion of the processing involves selecting a class index that corresponds to a filter designed for that class. There are 25 different classes, which may be divided into 4 groups. Classes 1 through 8 represent relatively smooth transitions having different angular orientations. In this embodiment, the angles are quantized into 8 separate bins, each subtending 45 degrees of arc. Classes 9 through 24 represent sharp edges, where classes 9through 16 are for pixels that lie on the dark side of sharp edges, and classes 17 through 24 are for pixels that lie on the light side of sharp edges. Finally, class 0 usually corresponds to the case where there are no transitions or edges at all.

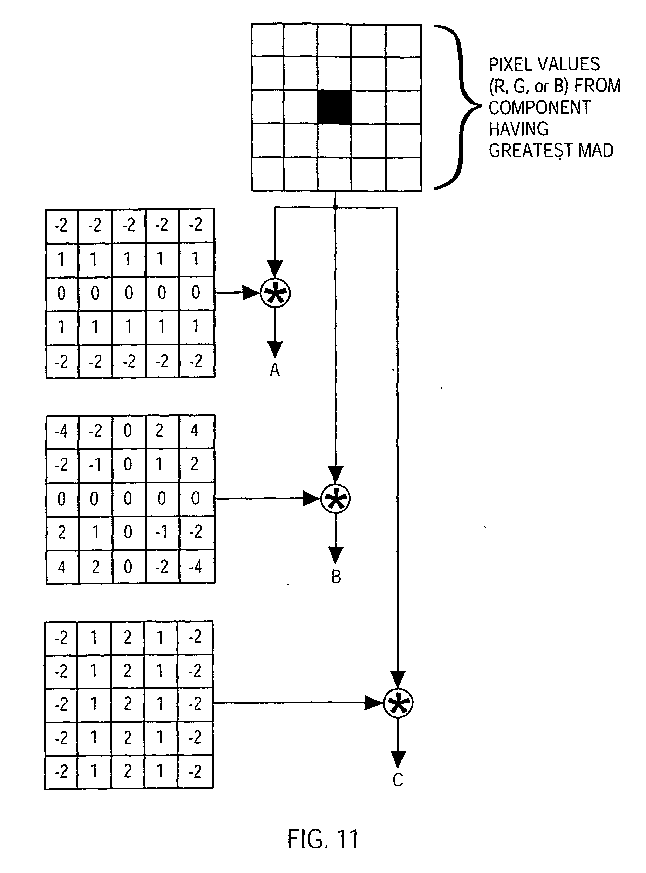

The class index selection is based on gradient information, which conveys the angle of any edge present at the input pixel. Depending on the gradient information, the class index selection may also be based on curvature information, which conveys the side of the edge the input pixel lies on (i.e., the darker side or the lighter side). The gradient information is represented with two coefficients, Gx and Gy; and the curvature information is obtained based on five coefficients A, B, C, Gx, and Gy. An exemplary manner in which the coefficients A, B, and C may be computed is described in greater detail hereinafter with reference to FIG. 11.

In the preferred implementation, the gradient and curvature coefficients are extracted from the 5x5 window centered at the input pixel. However, it is noted that windows of different sizes (e.g., 3x3, 7x7, 9x9) and shapes can be utilized with correspondingly different operators.

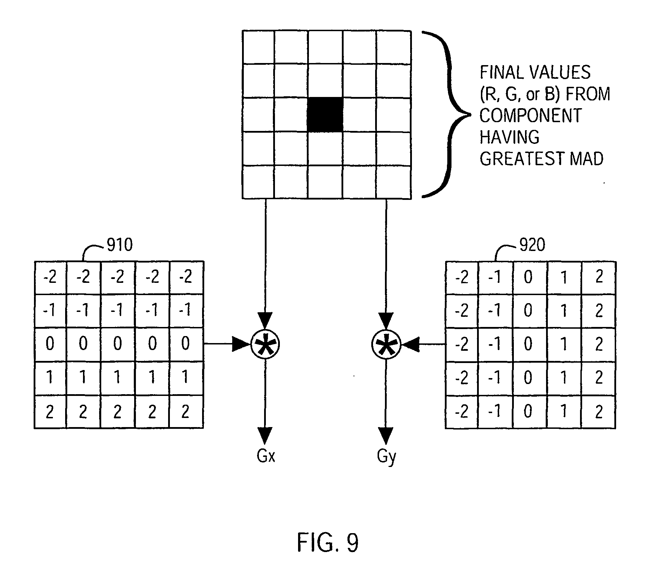

In step 800, the gradient coefficients Gx and Gy are computed by using two operators. FIG. 9 illustrates two exemplary sets of operator coefficients 910, 920 that may be utilized in accordance with one embodiment of the present invention. The operators 910 and 920, respectively, find edges of orthogonal directions (e.g., the horizontal direction and vertical direction). It is noted that other sets of operator coefficients may be selected to suit a particular application.

In particular, the set of operators should provide comprehensive edge angle information. For example, in the embodiment described herein, it is important that the coefficients for computing Gx form an operator for finding horizontal edges. Similarly, it is important that the coefficients for computing Gy form an operator for finding horizontal edges.

For example, the operators can be a first set of operator coefficients 910 that represent horizontal "bars" where each horizontal bar features the same value and second set of operator coefficients 920 that represent vertical "bars" where each vertical bar features the same value. It is noted that the first set of coefficients 910 is tuned to find horizontal edges because the coefficients in the upper half are negative, and the coefficients in the lower half are positive. Similarly, it is noted that the second set of coefficients 920 is tuned to find vertical edges because the coefficients in the left half are negative, and the coefficients in the right half are positive.

In this example, edge angle coefficient Gx is computed by employing the following expression:

$$Gx = \sum_{m=-2}^{2} \sum_{n=-2}^{2} I(m,n) \cdot GxC(m,n) \quad ,$$

where $I(\cdot,\cdot)$ represents the pixels from the color component having maximum mean absolute deviation, and $GxC(\cdot,\cdot)$ represents the first set of operator coefficients 910. Edge angle coefficient Gy is computed in a similar manner by using the second set of operator coefficients 920 at right.

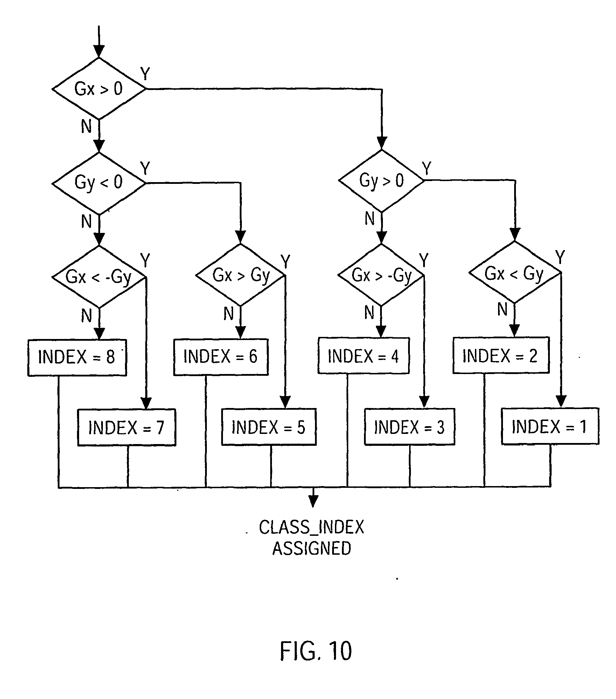

Next, in step 810 it is determined whether at least one of Gx and Gy is not equal to zero. When Gx is equal to zero and Gy is equal to zero, then in step 820 the class index is defined to be zero, and the filter selection process is finished. Otherwise, when either Gx is not equal to 0 or Gy is not equal to zero, in step 830 a tentative class index between 1 and 8 is determined based on Gx and Gy. An exemplary process of determining the tentative class index is described in greater detail hereinafter with reference to FIG. 10.

In step 840, an edge sharpness metric is computed. For example, the edge sharpness metric can be computed by using the following expression:

$$Gx \cdot Gx + Gy \cdot Gy$$

In decision block 850, it is determined if the sharpness metric is greater than a predetermined threshold. When the edge sharpness metric is less than or equal to threshold (THRESH2), then the tentative class index is regarded as the true class index, and he filter selection process is finished.

In one implementation, the value of THRESH2 is determined empirically and is intended to remain fixed for all input images. Another option would be to allow the value of THRESH2 to change from image to image or even from pixel to pixel.

When the edge sharpness metric is greater than or equal to threshold (THRUSH2), then in step 860, the curvature coefficients A, B, and C are computed. A preferred process for computing the curvature coefficients A, B, and C is described in greater detail hereinafter with reference to FIG. 11. This process is similar to the procedure employed to compute the gradient coefficients Gx and Gy as shown in FIG. 9.

In step 870, a curvature metric is computed based on A, B, C, Gx and Gy. For example, the curvature metric can be computed by using the following expression that involves A, B, C, Gx, and Gy:

$$\frac{1}{\text{edge\_shrp\_metric}} \left( \frac{1}{2} \cdot A \cdot Gx \cdot Gx + B \cdot Gx \cdot Gy + \frac{1}{2} \cdot C \cdot Gy \cdot Gy \right) \ ,$$

where edge_shrp_metric is the edge sharpness metric computed above.

In decision block 880, it is determined whether the curvature metric is greater than zero. When the curvature metric is positive, then in step 890 the final class index is computed by adding eight to the tentative class index. Otherwise, in step 894 the final class index is computed by adding sixteen to the tentative class index. In either case, the filter selection process is now complete.

In the foregoing specification, the invention has been described with reference to specific embodiments thereof. It will, however, be evident that various modifications and changes may be made thereto without departing from the broader scope of the invention. The specification and drawings are, accordingly, to be regarded in an illustrative rather than a restrictive sense. The scope of the invention is determined by the appended claims.

**Claims**

1. An image processing system adapted to improve appearance and compressibility of an image to be printed, said system comprising:

   a filter selection mechanism (230) for receiving an input pixel window, which is a smaller portion of said image to be printed, the filter selection mechanism determining (520) whether the input pixel window has a predetermined level of variation indicating a threshold level of image detail, and
   responsive (530) to the predetermined level of variation indicating the threshold level of image detail has not been met, generating a filter identifier for the input pixel window, the filter identifier identifying a blurring filter to be applied to the input pixel window portion of the image, and
   responsive (540) to the predetermined level of variation indicating the threshold level of image detail has been met, generating a filter identifier for the input pixel window, the filter identifier identifying an appearance enhancement filter to be applied to the input pixel window portion of the image resulting in a corresponding image enhanced output pixel portion of the image, the appearance enhancement filter being a sharpening filter based on edge information of a neighbourhood of the input pixels; and
   a filter application unit (240) coupled to the filter selection mechanism for receiving the filter identifier and applying a filter identified by the filter identifier to the input pixel window to generate the corresponding output pixel.

2. The image processing system of claim 1 further comprising:

   an edge parameter evaluation unit (234) for computing at least one edge parameter based on the input pixel window.

3. The image processing system of claim 2 wherein the edge parameter is one of edge angle, edge sharpness, edge curvature, and any measurable unit related to an edge.

4. The image processing system of claim 1 further comprising:

   an activity metric evaluation unit (238) for computing the level of variation indicating a level of image detail for the input pixel window.

5. The image processing system of claim 4 wherein the level of variation indicating a level of image detail is one of a level of variation of a red color plane, a level of variation of a green color plane, a level of variation of a blue color plane, a level of variation of a luminance plane, a mean absolute deviation of a red color plane, a mean absolute deviation of a green color plane, a mean absolute deviation of a blue color plane, and a mean absolute deviation of a luminance plane.

6. The image processing system of claim 1 wherein the filter application unit (240) includes a filter repository (244) for providing a plurality of filters for use by the filter application unit.

7. The image processing system of claim 6 wherein the filter repository includes one of a blurring filter, a smoothing filter, a sharpening filter, and an enhancement filter.

8. A method said method comprising :

   (a) receiving (500) an input pixel window which is a smaller portion of said image to be printed; variation indicating a threshold level of image detail;
   (b) determining (520) whether the input pixel window has a predetermined level of variation indicating a threshold level of image detail;
   (c) responsive (530) to the predetermined level of variation indicating the threshold level of image detail has not been met, generating a filter identifier for the input pixel window, the filter identifier identifying a blurring filter to be applied to the input pixel window portion of the image;
   (d) responsive (540) to the predetermined level of variation indicating the threshold level of image detail has been met, generating a filter identifier for the input pixel window, the filter identifier identifying an appearance enhancement filter to be applied to the input pixel window portion of the image resulting in a corresponding image enhanced output pixel portion of the image, the appearance enhancement filter being a sharpening filter based on edge information of a neighbourhood of the input pixels; and
   (e) applying (540) a filter identified by the filter identifier to the input pixel window to generate the corresponding output pixel.

9. The method of claim 8 wherein the step of receiving an input pixel window which is a smaller portion of said image to be printed includes the step of:

   receiving an input pixel window that includes a current input pixel and pixels adjacent to the current input pixel.

10. The method of claim 9 wherein the step of receiving an input pixel window which is a smaller portion of said image to be printed includes the step of:

    receiving an input pixel window that includes a N x N square of pixels centered about the current input pixel.

**Patentansprüche**

1. Ein Bildverarbeitungssystem, wobei das System folgende Merkmale aufweist:

einen Filterauswahlmechanismus (230) zum Empfangen eines Eingangspixelfensters, das ein kleinerer Abschnitt des zu druckenden Bildes ist, wobei der Filterauswahlmechanismus bestimmt (520), ob das Eingangspixelfenster einen vorbestimmten Pegel einer Abweichung aufweist, was einen Schwellenpegel von Bilddetails anzeigt, und

ansprechend (530) darauf, dass der vorbestimmte Pegel einer Abweichung anzeigt, dass der Schwellenpegel von Bilddetails nicht erreicht wurde, Erzeugen eines Filteridentifizierers für das Eingangspixelfenster, wobei der Filteridentifizierer identifiziert, dass ein Weichzeichnungsfilter an den Eingangspixelfensterabschnitt des Bildes angewendet werden soll, und

ansprechend darauf, dass der vorbestimmte Pegel einer Abweichung anzeigt, dass der Schwellenpegel von Bilddetails erreicht wurde, Erzeugen eines Filteridentifizierers für das Eingangspixelfenster, wobei der Filteridentifizierer ein Erscheinungsbildverbesserungsfilter identifiziert, das an den Eingangspixelfensterabschnitt des Bildes angewendet werden soll, was zu einem entsprechenden bildverbesserten Ausgangspixelabschnitt des Bildes führt, wobei das Erscheinungsbildverbesserungsfilter ein Schärfungsfilter basierend auf Randinformationen einer Nachbarschaft der Eingangspixel ist; und

eine Filteranwendungseinheit (240), die mit dem Filterauswahlmechanismus zum Empfangen des Filteridentifizierers gekoppelt ist und zum Anwenden eines Filters, identifiziert durch den Filteridentifizierer, an das Eingangspixelfenster, um das entsprechende Ausgangspixel zu erzeugen.

2. Das Bildverarbeitungssystem gemäß Anspruch 1, das ferner folgendes Merkmal aufweist:

   eine Randparameterbewertungseinheit (234) zum Berechnen von zumindest einem Randparameter basierend auf dem Eingangspixelfenster.

3. Das Bildverarbeitungssystem gemäß Anspruch 2, bei dem der Randparameter entweder ein Randwinkel, Randschärfe, Randkrümmung oder jegliche messbare Einheit ist, die sich auf einen Rand bezieht.

4. Das Bildverarbeitungssystem gemäß Anspruch 1, das ferner folgendes Merkmal aufweist:

   eine Aktivitätsmetrikbewertungseinheit (238) zum Berechnen des Pegels einer Abweichung, was einen Pegel von Bilddetails für das Eingangspixelfenster anzeigt.

5. Das Bildverarbeitungssystem gemäß Anspruch 4, bei dem der Pegel der Abweichung, der einen Pegel von Bilddetails anzeigt, entweder ein Pegel einer Abweichung einer roten Farbebene, ein Pegel einer Abweichung einer grünen Farbebene, ein Pegel einer Abweichung einer blauen Farbebene, ein Pegel einer Abweichung einer Luminanzebene, eine mittlere absolute Abweichung einer roten Farbebene, eine mittlere absolute Abweichung einer gründen Farbebene, eine mittlere absolute Abweichung einer blauen Farbebene oder eine mittlere absolute Abweichung einer Luminanzebene ist.

6. Das Bildverarbeitungssystem gemäß Anspruch 1, bei dem die Filteranwendungseinheit (240) ein Filter-Depot (244) umfasst zum Liefern einer Mehrzahl von Filtern zur Verwendung durch die Filteranwendungseinheit.

7. Das Bildverarbeitungssystem gemäß Anspruch 6, bei dem das Filter-Depot entweder ein Weichzeichnungsfilter, ein Glättungsfilter, ein Schärfungsfilter oder ein Verbesserungsfilter umfasst.

8. Ein Verfahren, das angepasst ist, um das Erscheinungsbild und die Kombinierbarkeit eines zu druckenden Bildes zu verbessern, wobei das Verfahren folgende Schritte aufweist:

   (a) Empfangen (500) eines Eingangspixelfensters, das ein kleinerer Abschnitt des Bildes ist, das gedruckt werden soll;
   (b) Bestimmen (520), ob das Eingangspixelfenster einen vorbestimmten Pegel einer Abweichung aufweist, was einen Schwellenpegel von Bilddetails anzeigt;
   (c) ansprechend (530) darauf, dass der vorbestimmte Pegel einer Abweichung anzeigt, dass der Schwellenpegel von Bilddetails nicht erreicht wurde, Erzeugen eines Filteridentifizierers für das Eingangspixelfenster, wobei der Filteridentifizierer identifiziert, dass ein Weichzeichnungsfilter an den Eingangspixelfensterabschnitt des Bildes angewendet werden soll;
   (d) ansprechend (540) darauf, dass der vorbestimmte Pegel einer Abweichung anzeigt, dass der Schwellenpegel von Bilddetails erreicht wurde, Erzeugen eines Filteridentifizierers für das Eingangspixelfenster, wobei der Filteridentifizierer ein Erscheinungsbildverbesserungsfilter identifiziert, das an den Eingangspixelfensterabschnitt des Bildes angewendet werden soll, was zu einem entsprechenden bildverbesserten Ausgangspixelabschnitt des Bildes führt, wobei das Erscheinungsbildverbesserungsfilter ein Schärfungsfilter basierend auf Randinformationen einer Nachbarschaft der Eingangspixel ist; und

(e) Anwenden (540) eines Filters, identifiziert durch den Filteridentifizierer, an das Eingangspixelfenster, um das entsprechende Ausgangspixel zu erzeugen.

**9.** Das Verfahren gemäß Anspruch 8, bei dem der Schritt des Empfangens eines Eingangspixelfensters, was ein kleinerer Abschnitt des Bildes ist, das gedruckt werden soll, folgenden Schritt umfasst:

Empfangen eines Eingangspixelfensters, das ein aktuelles Eingangspixel und Pixel benachbart zu dem aktuellen Eingangspixel umfasst.

**10.** Das Verfahren gemäß Anspruch 9, bei dem der Schritt des Empfangens eines Eingangspixelfensters, was ein kleinerer Abschnitt des Bildes ist, das gedruckt werden soll, folgenden Schritt umfasst:

Empfangen eines Eingangspixelfensters, das ein N x N Pixelquadrat umfasst, zentriert um das aktuelle Eingangspixel.

**Revendications**

**1.** Système de traitement d'image, adapté pour améliorer l'aspect et la compressibilité d'une image à imprimer, ledit système comprenant :

un mécanisme de sélection de filtres (230) permettant de recevoir une fenêtre de pixels d'entrée, qui est une plus petite partie de ladite image à imprimer, le mécanisme de sélection de filtres déterminant (520) si la fenêtre de pixels d'entrée atteint un niveau de variation prédéterminé indiquant un niveau de seuil du détail de l'image, et une réponse (530) au fait que le niveau de variation prédéterminé indiquant le niveau de seuil du détail de l'image n'ait pas été atteint, générant un filtre identificateur de la fenêtre de pixel d'entrée, le filtre identificateur identifiant un filtre de flou à appliquer à la partie de l'image fenêtre de pixel d'entrée, et une réponse (540) au fait que le niveau de variation prédéterminé indiquant le niveau de seuil du détail de l'image ait été atteint (540), générant un filtre identificateur de la fenêtre de pixels d'entrée, le filtre identificateur identifiant un filtre d'amélioration d'apparence à appliquer à la fenêtre de pixels d'entrée partie de l'image, résultant en une image correspondante améliorée pixels de sortie partie de l'image, le filtre d'amélioration d'apparence étant un filtre de définition des contours basé sur l'information du contour des pixels de sortie voisins ; et une unité d'application de filtres (240) couplée au mécanisme de sélection de filtres pour recevoir l'identificateur de filtres et appliquer un filtre identifié par l'identificateur de filtres à la fenêtre de pixels d'entrée pour générer les pixels de sortie correspondants.

**2.** Système de traitement d'image selon la revendication 1, comprenant également :

une unité d'évaluation des paramètres des contours (240) permettant de calculer au moins un paramètre de contours basé sur la fenêtre de pixels d'entrée.

**3.** Système de traitement d'image selon la revendication 2, dans lequel le paramètre de contour est choisi parmi l'angle du contour, la netteté du contour, la courbure du contour, et toute unité mesurable en relation avec un contour.

**4.** Système de traitement d'image selon la revendication 1, comprenant également :

une unité d'évaluation des activités métriques (238) permettant de calculer le niveau de variation indiquant un niveau de détail de l'image pour la fenêtre de pixels d'entrée.

**5.** Système de traitement d'image selon la revendication 4, dans lequel le niveau de variation indiquant un niveau de détails de l'image est choisi parmi un niveau de variation d'un plan rouge, un niveau de variation d'un plan vert, d'un niveau de variation d'un plan bleu, un niveau de variation d'un plan de luminance, un écart moyen absolu d'un plan rouge, un écart moyen absolu d'un plan vert, un écart moyen absolu d'un plan bleu, et un écart moyen absolu d'un plan de luminance.

**6.** Système de traitement d'image selon la revendication 1, dans lequel l'unité d'application de filtres (240) comprend un filtre référentiel (244) permettant de fournir une pluralité de filtres utilisables par l'unité d'application de filtres.

**7.** Système de traitement d'image selon la revendication 6, dans lequel le filtre référentiel est choisi parmi un filtre de flou, un filtre de lissage, un filtre de définition des contours, et un filtre d'amélioration.

**8.** Méthode adaptée pour améliorer l'aspect et la compressibilité d'une image à imprimer, ladite méthode comprenant :

a) recevoir (500) une fenêtre de pixels d'entrée qui est une plus petite partie de ladite image à imprimer,
b) déterminer (520) si la fenêtre de pixels d'entrée a un niveau de variation prédéterminé indiquant un niveau de seuil de détail de l'image,
c) répondre (530) au fait que le niveau de variation prédéterminé indiquant le niveau de seuil du détail de l'image n'ait pas été atteint, en générant un filtre identificateur de la fenêtre de pixels d'entrée, le filtre identificateur identifiant un filtre de flou à appliquer à la fenêtre de pixels d'entrée partie de l'image ;
d) répondre (540) au fait que le niveau de variation prédéterminé indiquant le niveau de seuil du détail de l'image ait été atteint, en générant un filtre identificateur de la fenêtre de pixels d'entrée, le filtre identificateur identifiant un filtre d'amélioration d'apparence à appliquer à la fenêtre de pixels d'entrée partie de l'image, résultant en une image correspondante améliorée pixels de sortie partie de l'image, le filtre d'amélioration d'apparence étant un filtre de définition des contours basé sur l'information du contour des pixels de sortie voisins ; et
e) appliquer (540) un filtre identifié par l'identificateur de filtres à la fenêtre de pixels d'entrée pour générer les pixels de sortie correspondants.

**9.** Méthode selon la revendication 8, dans laquelle l'étape de recevoir une fenêtre de pixels d'entrée qui est une plus petite partie de ladite image à imprimer comprend l'étape de :

recevoir une fenêtre de pixels d'entrée qui comprend un pixel d'entrée courant et des pixels adjacents au pixel d'entrée courant.

**10.** Méthode selon la revendication 9, dans laquelle l'étape de recevoir une fenêtre de pixels d'entrée qui est une plus petite partie de ladite image à imprimer comprend l'étape de :

recevoir une fenêtre de pixels d'entrée qui comprend un carré de N*N de pixels centrés autour du pixel courant.

FIG. 1

AECIM 140

FILTER
SELECTION
MECHANISM 230

| EDGE PARAMETER EVALUATION UNIT | ACTIVITY METRIC EVALUATION UNIT |
|---|---|
| 234 | 238 |

INPUT
PIXEL
WINDOW
210

FILTER IDENTIFIER 236

FILTER
APPLICATION
UNIT 240

FILTER REPOSITORY

F_1 ··· F_N

244

OUTPUT PIXEL

FIG. 2

FIG. 3

FIG. 4

```
┌─────────────────────────────────────────────┐
│  RECEIVING A FIRST WINDOW OF PIXELS          │
│                                              │
│                                       500    │
└─────────────────────────────────────────────┘
                      │
                      ▼
┌─────────────────────────────────────────────┐
│  COMPUTE LEVEL OF VARIATION                  │
│  WITHIN FIRST WINDOW                         │
│                                       510    │
└─────────────────────────────────────────────┘
                      │
                      ▼
┌─────────────────────────────────────────────┐
│  IS LEVEL OF VARIATION IN PREDETERMINED      │        NO
│  RELATIONSHIP WITH PREDETERMINED LEVEL ├──────────────┐
│  OF VARIATION?                        520    │         │
└─────────────────────────────────────────────┘         │
                      │ YES                              │
                      ▼                                  │
┌─────────────────────────────────────────────┐         │
│  REPLACE CURRENT PIXEL VALUE                 │         │
│  WITH BLURRED VERSION OF PIXEL               │         │
│  TO INCREASE COMPRESSION              530    │         │
└─────────────────────────────────────────────┘         │
                                                         │
                                                         │
┌─────────────────────────────────────────────┐         │
│  APPLYING AN ENHANCEMENT FILTER TO           │         │
│  INPUT PIXEL WINDOW BASED ON EDGE            │◄────────┘
│  PARAMETER OF A NEIGHBORHOOD OF              │
│  PIXELS ASSOCIATED WITH CURRENT PIXEL        │
│  TO IMPROVE APPEARANCE                 540    │
└─────────────────────────────────────────────┘
```

FIG. 5

5X5 PIXEL WINDOW — COLOR INPUT PIXEL

USES PIXELS IN 3X3 WINDOW

COMPUTE MEAN ABSOLUTE DEVIATION (MAD) FOR RED, GREEN, AND BLUE PLANES — 600

SCALE rMAD AND bMAD FOR THRESHOLD COMPARISON — 610

rAVE = AVERAGE OF 3X3 WINDOW OF RED PIXELS

IF rMAD < THRESH1 THEN RED OUTPUT PIXEL = rAVE — 620

IF gMAD < THRESH1 THEN GREEN OUTPUT PIXEL = gAVE — 630

IF bMAD < THRESH1 THEN BLUE OUTPUT PIXEL = bAVE — 640

650

ANY OUTPUT PIXEL COMPONENTS NOT YET DETERMINED?

Y — COMPUTE REMAINING PIXEL COMPONENTS WITH NONLINEAR FILTER 660

N

COLOR OUTPUT PIXEL

FIG. 6

~700

SELECT FILTER BASED ON PIXELS FROM
COLOR COMPONENT WITH GREATEST MAD

~710

RED OUTPUT
PIXEL ALREADY
DETERMINED?

N →

~720

GENERATE RED OUTPUT
PIXEL BY APPLYING
SELECTED FILTER
TO RED PLANE

Y

~730

GREEN OUTPUT
PIXEL ALREADY
DETERMINED?

N →

~740

GENERATE GREEN OUTPUT
PIXEL BY APPLYING
SELECTED FILTER
TO GREEN PLANE

Y

~750

BLUE OUTPUT
PIXEL ALREADY
DETERMINED?

N →

~760

GENERATE BLUE OUTPUT
PIXEL BY APPLYING
SELECTED FILTER
TO BLUE PLANE

Y

REMAINING PIXEL
VALUES DETERMINED

FIG. 7

5X5 PIXEL FROM
COMPONENT (R, G, OR B)
HAVING GREATEST MAD

COMPUTE EDGE ANGLE COEFFICIENTS Gx, Gy ⌐800

⌐810
Gx ! = 0
or
Gy ! = 0

Y → ASSIGN CLASS_INDEX A VALUE BETWEEN 1 ⌐830
AND 8 (INCLUSIVE) BASED ON Gx AND Gy

N

COMPUTE EDGE SHARPNESS METRIC FROM Gx, Gy ⌐840

⌐850
SHARPNESS
METRIC >
THRESH2

Y → COMPUTE CURVATURE ⌐860
COEFFICIENTS A, B, C

N

COMPUTE CURVATURE ⌐870
METRIC FROM A, B, C

CLASS_INDEX = 0 ⌐820

⌐880
CURVATURE
METRIC > 0

Y

N ⌐894                    ⌐890

ADD 16 TO          ADD 8 TO
CLASS_INDEX        CLASS_INDEX

USE FILTER CORRESPONDING TO CLASS INDEX

FIG. 8

FINAL VALUES
(R, G, or B) FROM
COMPONENT
HAVING
GREATEST MAD

910

| -2 | -2 | -2 | -2 | -2 |
|----|----|----|----|----|
| -1 | -1 | -1 | -1 | -1 |
| 0 | 0 | 0 | 0 | 0 |
| 1 | 1 | 1 | 1 | 1 |
| 2 | 2 | 2 | 2 | 2 |

920

| -2 | -1 | 0 | 1 | 2 |
|----|----|---|---|---|
| -2 | -1 | 0 | 1 | 2 |
| -2 | -1 | 0 | 1 | 2 |
| -2 | -1 | 0 | 1 | 2 |
| -2 | -1 | 0 | 1 | 2 |

Gx          Gy

FIG. 9

FIG. 10

PIXEL VALUES
(R, G, or B) FROM
COMPONENT
HAVING
GREATEST MAD

| -2 | -2 | -2 | -2 | -2 |
|----|----|----|----|----|
| 1  | 1  | 1  | 1  | 1  |
| 0  | 0  | 0  | 0  | 0  |
| 1  | 1  | 1  | 1  | 1  |
| -2 | -2 | -2 | -2 | -2 |

A

| -4 | -2 | 0 | 2  | 4  |
|----|----|---|----|----|
| -2 | -1 | 0 | 1  | 2  |
| 0  | 0  | 0 | 0  | 0  |
| 2  | 1  | 0 | -1 | -2 |
| 4  | 2  | 0 | -2 | -4 |

B

| -2 | 1 | 2 | 1 | -2 |
|----|---|---|---|----|
| -2 | 1 | 2 | 1 | -2 |
| -2 | 1 | 2 | 1 | -2 |
| -2 | 1 | 2 | 1 | -2 |
| -2 | 1 | 2 | 1 | -2 |

C

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6192161 A
- EP 0531904 A
- US 5050227 A
- US 5920356 A
- EP 0686941 A


**Non-patent literature cited in the description**

- **RAJESH JHA ; JERNIGAN M E.** EDGE ADAPTIVE FILTERING: HOW MUCH AND WHICH DIRECTION?. *PROCEEDINGS OF THE INTERNATIONAL CONFERENCE ON SYSTEMS, MAN AND CYBERNETICS,* 14 November 1989, vol. 1, 364-366